# EUROPEAN PATENT APPLICATION

(11) **EP 2 023 564 A1**
(43) Date of publication of application: **11.02.2009**
(21) Application number: 07015779.7
(22) Date of filing: 10.08.2007
(51) Int. Cl.: H04L 29/06

(54) **Method and device fordata interception and communication system comprising such device**

(71) Applicant: Nokia Siemens Networks Oy, 02610 Espoo (FI)
(72) Inventor: Kröselberg, Dirk, 80469 München (DE)
(74) Representative: Schober, Ralf Stefan

(57) **Abstract**

A method and a device for data interception in a network are provided, said network comprising a mechanism and/or a functionality according to an Extensible Authentication Protocol (EAP). The method comprises the steps of (a) a first network element requests an identity information from a second network element; (b) the second network element provides the identity information; and (c) the identity information is conveyed to a third network element.

## Description

The invention relates to a method and to a device for data interception and to a communication system comprising such a device.

For details on WiMAX networks reference is made to [1].

In WiMAX networks, it is possible to hide the real subscription and hence the subscriber's identity from the local access network and/or from the visited network (in case of roaming). This means that a Access Service Network (ASN), or a visited Connectivity Service Network (vCSN) are not able to identify the subscriber using any service offered by their network. Only the home CSN (hCSN) of a subscriber is able to reveal the subscriber's identity.

WiMAX subscribers or devices can use a pseudonym instead of their real subscription identities as the username part of the Network Access Identifier (NAI, see [2]) provided to the network during network entry and during the authorization procedure uses an Extensible Authentication Protocol (EAP, see [3]).

The real subscription identity is communicated only from the subscriber's device to the hCSN, EAP allows for hiding this identity in a way that any traversed network in-between, especially ASN or any vCSN cannot see the real identity of the subscriber.

Legal interception may be required in the local access network or the visited network in particular with regard to a nationally or internationally roaming subscriber. However, as no real subscription identity is made available in the ASN or vCSN, any Legal Enforcement Agency (LEA) is unable to map any intercepted information to a specific subscriber, i.e. a real or legal person.

The **problem** to be solved is to overcome the disadvantages as described and to provide an approach that allows legal interception in an efficient way.

This problem is solved according to the features of the independent claims. Further embodiments result from the depending claims.

In order to overcome this problem, a method for data interception in a network is provided, said network comprising a mechanism and/or a functionality according to an Extensible Authentication Protocol (EAP). The method comprises the following steps:
(a) a first network element requests an identity information from a second network element;
(b) the second network element provides the identity information;
(c) the identity information is conveyed to a third network element.

It is to be noted that intercepted data may refer to user data as well as to control data. Basically, various kinds of data traffic may be subject to interception.

For legal interception purposes, in particular in WiMAX networks, it may be useful providing access to both control and data traffic generated by and for a subscriber that uses network and application services (e.g., VoIP or any form of multimedia) offered by the (WiMAX) network.

Interception is typically done in network entities being in charge of controlling the subscriber related traffic. For a WiMAX network, in particular the Access Service Network Gateway (ASN GW) in the ASN, the Home Agent (HA) or a router in the Connectivity Service Network (CSN), and an Authentication, Authorization and Accounting (AAA) server are expected to be subject to regulatory requirements in the area of legal interception, i.e. these entities may have to provide appropriate interfaces and functionalities to provide information as requested by an LEA.

An significant information that is subject to such an interception is an identity and/or additional information allowing to map intercepted data to the subscription used by the device being intercepted. Hence, the subscriber's identity referring to a real or legal person can be determined.

The approach presented in particular applies to network architectures using an Extensible Authentication Protocol (EAP) that may be utilized to describe an access network, a visited network and/or a home network in general.

In an EAP approach, the identity can - depending on the capabilities of an actual EAP method - be hidden and only be revealed by the end device (EAP supplicant) and the backend AAA server, but not by an intermediate network element.

In an embodiment, the network comprises a Wireless Local Area Network (WLAN) and/or a Worldwide Interoperability for Microwave Access system (WiMAX).

In particular, the network may comprise several such WLANs and/or WiMAX networks.

In another embodiment, the first network element comprises a functionality of at least one of the following components:
- an Access Service Network Gateway;
- a Home Agent or a router;
- an AAA server located within the visited network.

Furthermore, the first network element may be realized in or as one of the previous components.

In a further embodiment, the second network element comprises a functionality of at least one of the following components:
- an AAA server;
- a computer system performing AAA services.

Furthermore, the second network element may be realized in or as one of the previous components.

In a next embodiment, the network comprises a mobile station, a visited network and a home network.

It is also an embodiment that
- the first network element is associated with and/or located in the visited network; and
- the second network element is associated with and/or located in the home network.

Pursuant to another embodiment, the first network element requests an identity information for one subscriber or for more subscribers from the second network element.

According to an embodiment, said identity information comprises at least one of the following:
- an identity of at least one subscriber;
- identities of a group of subscribers;
- an identity based on a pseudonym and/or an identifier used in the network, in particular based on a MAC address;
- a status of a subscriber, in particular a status of connection within the network.

The identity of the subscriber may in particular comprise information upon the real subscriber, i.e. the real or legal person behind the subscription. The status of a subscriber may reveal whether such subscriber is (or was) active in the network. In addition, the status may show a position of the subscriber within the respective network, in particular over a given time period. Based on such information, tracking of a subscriber's position within the network (over a pre-determined period of time) is possible, in particular with the benefit of hindsight.

According to another embodiment, the third network element is a legal interception (LI) device.

Such legal interception (LI) device may be located within the range of a visited network or within a home network. The LI device may further be at least partially implemented within the first network element.

In yet another embodiment, the third network element sends an interception message to the first network element prior to step (a).

Such interception message allows the third network element to define a request related to the identification information to be obtained. Such interception message may comprise data of a real or of legal person to be identified (or searched for). The identity information to be revealed by the method described is whether such person is currently (or was) active in the network. Furthermore, a position of such person might be revealed. The interception message may in particular be directed to more than one subscriber and/or to all or a group of subscribers (for a predetermined period of time).

As an alternative, the interception message may comprise a pseudonym, temporary session identifier, or network identifier (e.g., MAC address, NAI, AAA session ID, Chargeable user id (CUI), IP addresses) to which the real subscriber is required.

According to a next embodiment, the first network element requests the identity information from the second network element in a AAA information exchange.

Such implementation would allow to reveal the identity for several and/or all subscribers, e.g., within a given time period. As such implementation may be switched on/off for a predefined period of time, only the LEA may know whose identity is actually requested (among the great number of identities actually revealed).

This approach is preferably combined with ciphering as set forth below.

Pursuant to yet an embodiment, the identity information is encrypted. Preferably, the identity information is encrypted by the second instance and decrypted by the third instance.

As another embodiment, a symmetric or an asymmetric ciphering is used.

The problem stated above is also solved by a device for legal interception comprising a processor unit that is equipped / arranged such that the method as described herein is executable on said processor unit.

It is an embodiment that the device is a communication device, in particular a Legal Interception (LI) device.

The problem stated supra is further solved by a device for legal interception comprising:
- means for requesting a legal interception from a first network element;
- means for receiving an identity information from the first network element after it has been obtained from a second network element.

In addition, the problem stated above is solved by a communication system comprising the device as described herein.

Embodiments of the invention are shown and illustrated in the following figures:
- Fig.1: shows a WiMAX Architecture comprising a (Mobile) Subscriber Station, a visited network and a home network;
- Fig.2: shows a message format of a "Permanent-ID Request";
- Fig.3: shows a message flow diagram comprising a pull mechanism to provide legal interception for a Legal Enforcement Agency;
- Fig.4: shows a message flow diagram comprising a ciphering mechanism utilized to provide legal interception to a Legal Enforcement Agency.

The approach presented herein in particular utilizes an AAA interface in WiMAX network that connects an ASN with an hCSN AAA server via an R3 interface. Alternatively, the WiMAX network may connect a vCSN with the hCSN via an R5 interface.

Preferably, a pull-mechanism is applied to resolve the pseudo-identity, or a push-mechanism is used to make the real subscription identity available to the legal intercept facilities and LEAs.

The pull mechanism advantageously utilizes a WiMAX AAA protocol (IETF RADIUS or Diameter) to request the subscriber's identity from the hCSN AAA server that is aware of subscription authorization using particular attributes.

The push mechanism may automatically pass the subscriber's identity to the vCSN or to the ASN network element that is responsible to perform legal interception during the authorization phase.

To preserve the identity hiding property of the WiMAX network and/or the EAP authentication mechanism, a security mechanism may be added restricting access to the identity information to authorized LI parties only. Such security add-on can be applied to both the push and the pull mechanism.

In addition to the real subscriber identity, i.e. to the identity of the real or legal person behind or associated with a particular subscription, further related information can be provided by the AAA server. One example is that identity information is provided referring to more than one subscribers, in particular to a group of subscribers, in particular over a (pre-determined) period of time. Furthermore, identity information may be associated with personal information of various kind, particulars, MAC addresses of devices bound to the subscription, related application-level identities, etc.

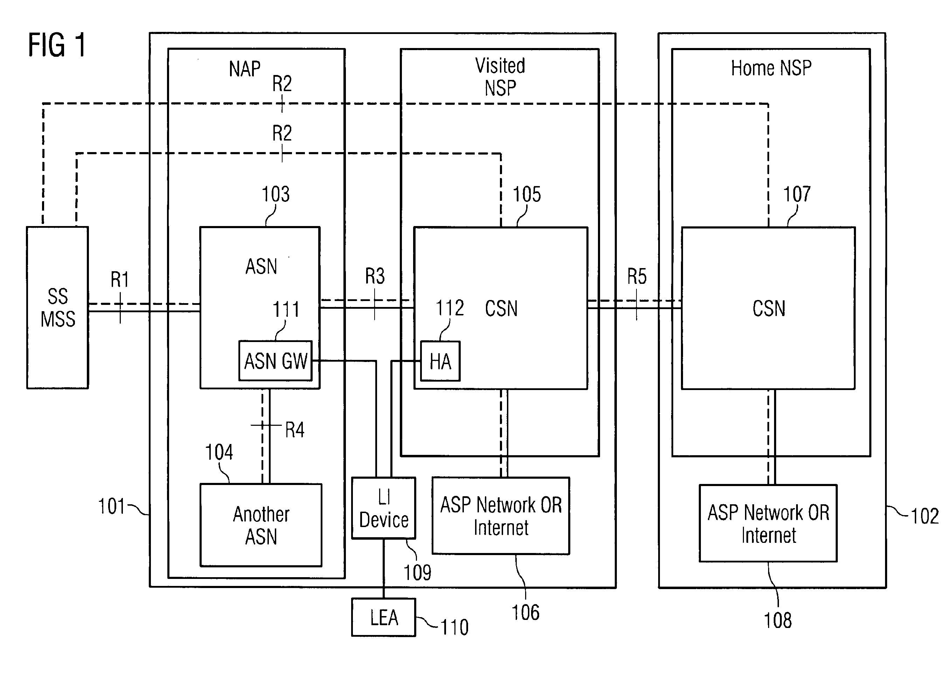

**Fig.1** shows a WiMAX Architecture comprising a Subscriber Station SS (also referred to as Mobile SS, MSS), a visited network 101 and a home network 102.

The visited network 101 comprises a Network Access Provider NAP with an Access Service Network ASN 103 and another ASN 104, wherein the ASN 103 and the ASN 104 are connected via an R4 interface. The visited network 101 further comprises a visited Network Service Provider NSP comprising a Connectivity Service Network CSN 105 that is connected to an ASP network or the Internet 106.

The ASN 103 and the CSN 105 are connected via an R3 interface. The Subscriber Station SS is connected to the ASN 103 via an R1 interface. The Subscriber Station SS is further connected to the CSN 105 via an R2 interface.

The home network 102 comprises a home Network Service Provider NSP with a Connectivity Service Network 107 that is connected to a ASP Network or the Internet 108. The CSN 107 is connected to the CSN 105 via an R5 interface and to the Subscriber Station SS via an R2 interface.

A LI Device 109 may be located within the visited network 101 or the home network 102 and is connected to a Legal Enforcement Agency 110.

In an embodiment, the LI Device 109 is connected to an ASN GW 111 within the ASN 103 and to a Home Agent HA 112 within the CSN 105. It is to be noted that the ASN GW 111 and/or the HA 112 may be functional components implemented in the respective blocks 103, 105. Alternatively, the ASN GW and/or HA may comprise such LI device functionality 109.

### Pull Mechanism

The pull mechanism can be realized by using the AAA interface of WiMAX. This may in particular be based on a RADIUS protocol (according to [4]) or on a Diameter protocol.

The network element or entity being required to generate legal intercept information is, e.g., an ASN-GW, a AAA proxy/server within a vCSN, a HA or an application server. This network element sends a RADIUS access request message to the AAA server that includes a Network Access Identifier NAI used by the network element for EAP-based authorization purposes. The NAI can be the pseudonym corresponding to a pseudo identity currently used by the network element.

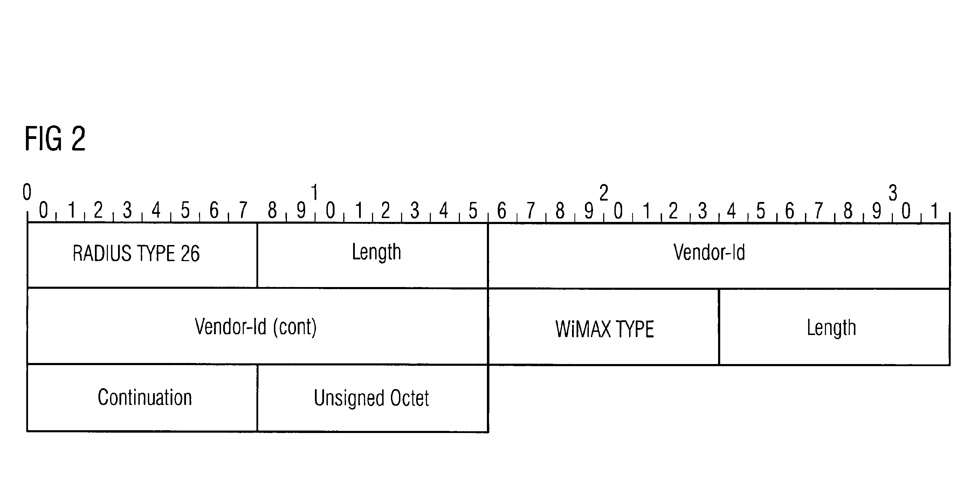

Preferably, a RADIUS attribute is supplemented that can, e.g., be defined as a WiMAX VSA (vendor specific attribute) "Permanent-ID Request" according to **Fig.2**.

The WiMAX type to be allocated as a new number may be yet unused to indicate the "Permanent-ID Request attribute".

The value of the attribute is an 8-bit Unsigned Octet in the example that is set to "1" to request the permanent identity matching the given (pseudonym) NAI. As this is one example only, other alternatives of the above attribute may be:
- no content (instead of the value "1", the mere presence of the attribute may indicate the request);
- a plain string value of variable length (to send proprietary parameters between the AAA client and server, said plain string value being subject to local agreement);
- other parameters like information about the actual country, location or other information related to legal intercept decisions in/for the AAA server.

The same RADIUS Access Request message preferably comprises at least one of the following attributes:
- the NAI which the permanent subscription identity is requested for, or
- the AAA-Session ID value of the current AAA session;
- a Chargeable User Identity CUI.

Each of these values can be used in the "Permanent-ID Request" to allow the AAA server to resolve the temporary NAI and hence reveal the subscriber's identity.

The AAA server may check upon receiving such request whether local policy allows revealing the requested identity of the subscriber. In the affirmative, the AAA server may provide a RADIUS response message. According to the implementation example this can be a "RADIUS Access Accept" message carrying at least the subscription identity belonging to the received NAI or AAA Session-ID. The subscription identity can, e.g., be conveyed in a NAI attribute, as this would typically be in NAI format.

However, this is not limited to a NAI format and can also be a different identity format, e.g., a plain string of characters.

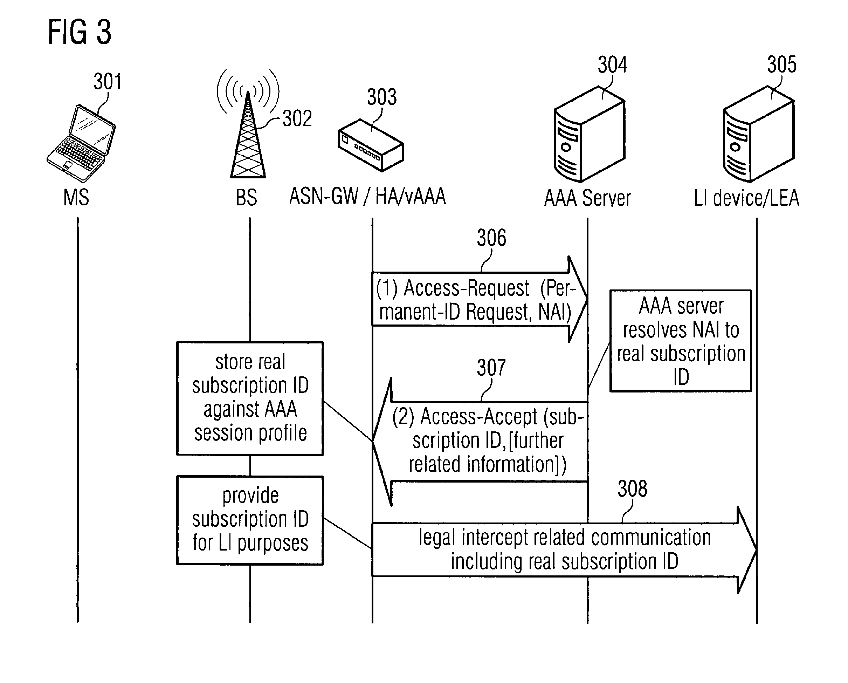

**Fig.3** shows a message flow diagram comprising a pull mechanism to provide legal interception for a LEA. It shows a mobile station MS 301, a base station BS 302 a first network element 303 (that can be, e.g., an ASN GW, a HA, a vAAA or the like), a second network element 304 (e.g., a AAA server) and a third network element 305 (e.g., a LI device and/or a LEA).

The first network element 303 requests identity information by sending an Access-Request message 306 to the second network element 304 conveying as parameters the "Permanent-ID Request" and the Network Access Identifier NAI.

The second network element 304 maps the NAI to the real subscription ID (associated with the subscriber's identity) and provides a response 307 ("Access-Accept" message with parameters: subscription ID, optional: further subscriber-related information) to the first network element 303.

The first network element 303 stores the subscription ID obtained ("identity information") in view of the AAA session profile that applies to this particular subscription ID.

In order to convey the subscription ID for LI purposes, the first network element 303 sends a legal intercept related communication 308 comprising the real subscription ID to the third network element 305.

Optionally, prior to sending the message 306, the third network element 305 may convey a LI message to the first network element 303. Optional parameters are a network-related information of at least one particular mobile station (MAC-address, pseudonym, etc.) and/or a real subscription ID in order to find out whether such subscriber is currently (or was) attached to the network.

### Push Mechanism

The push mechanism suggested comprises the AAA server conveying the identity of the subscriber in the RADIUS Access-Accept message as described above.

However, with the push mechanism the network element receiving the RADIUS Access-Accept message and hence the subscriber's identity preferably stores all (or at least a group of) identities, preferably for a (pre-determined) period of time, in view of the corresponding AAA session context. Hence, the identities would be available when required for completing and/or conducting any legal interception.

This approach can advantageously be implemented in a communication mechanism and hence (always) provide the subscriber's identity to the network element. The network element may preferably be an ASN GW, a HA, a vAAA or an application server.

The push mechanism may preferably be combined with ciphering such that only the addressee, i.e., the Legal Interception device is capable of decrypting the identity information.

In contrast to the pull mechanism, the push mechanism allows hiding from the CSN the information which subscriber is subject to an actual interception. This in particularly useful as the CSN can be a different business entity of a different country with different legal context.

### Ciphering

Both mechanisms explained above (i.e., push and pull mechanisms) may be combined with a mechanism to protect the subscriber's identity from unauthorized disclosure in the ASN or in any vCSN.

Instead of including the permanent user identity and related information transparently within the RADIUS Access Accept message, the AAA server can include an encrypted container carrying this confidential piece of information. Hence, e.g., intermediate AAA proxies and in general all entities located in the AAA signaling path (or being able to access this path) cannot obtain the identity information.

This can be achieved, e.g., by encrypting the identity information (and related information) by a public key that is owned by the LI devices of the network.

For example, the hCSN can be expected to have a contractual relationship with the local ASN or with the vCSN to which its subscriber is attaching to. This relationship typically requires configuration of a cryptographic key for protecting RADIUS communication anyway, in particular between the entity being required to generate LI information, and the AAA server.

As an option, a public/private key pair and a certificate (the public key being part of this certificate) are introduced that are owned by the LI devices or facilities of the network. Subsequently, the certificate can be conveyed to the hCSN operator knowing the subscriber.

The AAA server of the hCSN uses the certificate to encrypt the identity information, and sends it via an encrypted container in the RADIUS message. Hence, only authorized legal intercept facilities are able to access the real subscriber's identity.

The advantage of the ciphering mechanism when used in combination with the push or pull mechanism is that the existing feature of the WiMAX network, or an EAP method in general, that allows hiding a subscriber's identity from (visited) CSN as well as from ASN operators can be maintained. However, exceptionally for legal interception purposes, the real subscription ID can be revealed.

Preferably, the ciphering mechanism may require existing Public Key Infrastructure (PKI) to issue such certificates for LI purposes. In this context, part of the existing WiMAX Forum PKI solution can provide a WiMAX Forum top-level Certificate Authority.

A static pre-configuration of certificates in the AAA server can be circumvented by including the certificate in the RADIUS Access Request message sent by the intercepting network as shown in message 306 of Fig.3 or in the initial RADIUS Access Request message for network entry for the push mode.

Another advantage of the ciphering mechanism is that PKI in combination with an already defined PKI for WiMAX networks allows the AAA server to digitally sign the subscriber's identity thereby providing cryptographic verification of the correctness as well as trustworthiness of the source of information to the LI infrastructure.

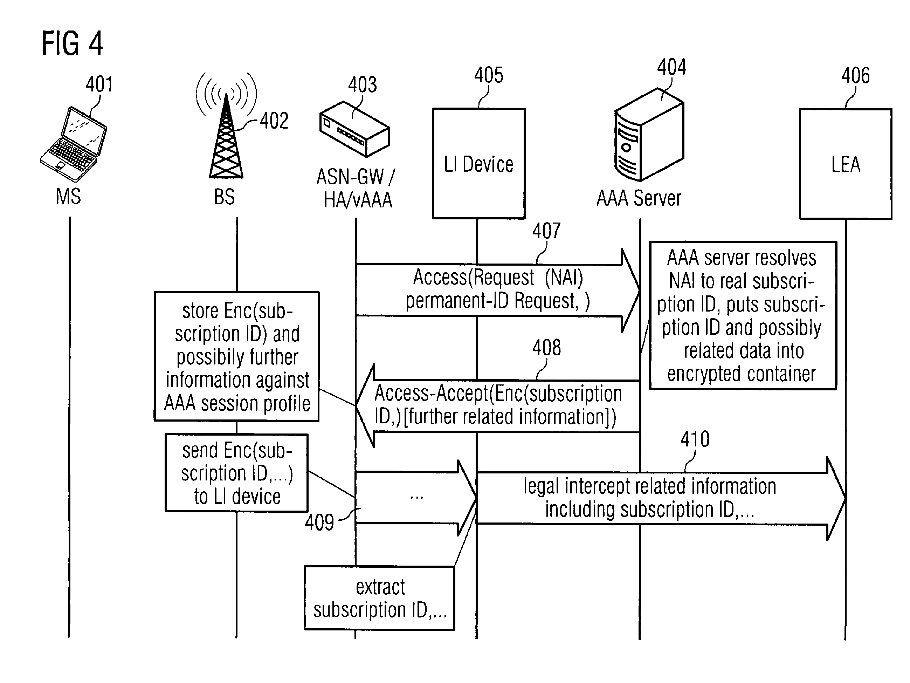

**Fig.4** shows a message flow diagram comprising a ciphering mechanism utilized to provide legal interception to a LEA. It shows a mobile station MS 401, a base station BS 402 a first network element 403 (that can, e.g., be an ASN GW, a HA, a vAAA or the like), a second network element 404 (e.g., a AAA server), a third network element 405 (e.g., a LI device) and a LEA 406.

The first network element 403 requests identity information by sending an Access-Request message 407 to the second network element 404 conveying as parameters the "Permanent-ID Request" and the Network Access Identifier NAI.

The second network element 404 maps the NAI to the real subscription ID (associated with the subscriber's identity), encrypts the subscription ID into an encrypted container and provides a response 408 ("Access-Accept" message with parameters: encrypted subscription ID, optional: further subscriber-related information) to the first network element 403.

The first network element 403 stores the container comprising the encrypted subscription ID obtained ("identity information") in view of the AAA session profile that applies to this particular subscription ID.

The first network element 403 sends via a message 409 the encrypted subscription ID (e.g., the container) to the third network element 405, which extracts (decrypts) the subscription ID and forwards the legal intercept related information including the subscription ID to the LEA 406 via a message 410.

### Abbreviations:

- AAA: Authentication, Authorization and Accounting
- ASN: Access Service Network
- ASP: Application Service Provider
- CSN: Connectivity Service Network
- CUI: Chargeable User Identity
- EAP: Extensible Authentication Protocol
- GW: Gateway
- HA: Home Agent
- hCSN: home CSN
- IP: Internet Protocol
- LEA: Legal Enforcement Agency
- LI: Legal Interception
- MSS: Mobile Subscriber Station
- NAI: Network Access Identifier
- NAI: Network Access Identifier
- NAP: Network Access Provider
- NSP: Network Service Provider
- PKI: Public Key Infrastructure
- RADIUS: Remote Access Dial In User Service
- SS: Subscriber Station
- vCSN: visited CSN
- VoIP: Voice over IP
- VSA: Vendor Specific Attribute
- WiMAX: Worldwide Interoperability for Microwave Access
- WLAN: Wireless Area Network

### References:

[1] WiMAX-Forum, Technical Documents and Specifications:
   http://www.wimaxforum.org/technology/documents
[2] RFC 4284:
   http://www.rfc-archive.org/getrfc.php?rfc=4284
[3] RFC 3748:
   http://www.rfc-archive.org/getrfc.php?rfc=3748
[4] RFC 2865:
   http://www.rfc-archive.org/getrfc.php?rfc=2865

## Claims

1. A method for data interception in a network comprising a mechanism according to or a functionality according to an Extensible Authentication Protocol, said method comprising the following steps:
(a) a first network element requests an identity information from a second network element;
(b) the second network element provides the identity information;
(c) the identity information is conveyed to a third network element.

2. The method according to claim 1, wherein the network comprises a Wireless Local Area Network and/or a Worldwide Interoperability for Microwave Access system.

3. The method according to any of the preceding claims, wherein the first network element comprises a functionality of at least one of the following components:
- an Access Service Network Gateway;
- a Home Agent or a router;
- an AAA server located within the visited network.

4. The method according to any of the preceding claims, wherein the second network element comprises a functionality of at least one of the following components:
- an AAA server;
- a computer system performing AAA services.

5. The method according to any of the preceding claims, wherein the network comprises a mobile station, a visited network and a home network.

6. The method according to claim 5, wherein
- the first network element is associated with and/or located in the visited network; and
- the second network element is associated with and/or located in the home network.

7. The method according to any of the preceding claims, wherein the first network element requests an identity information for one subscriber or for more subscribers from the second network element.

8. The method according to any of the preceding claims, wherein said identity information comprises at least one of the following:
- an identity of at least one subscriber;
- identities of a group of subscribers;
- an identity based on a pseudonym and/or an identifier used in the network, in particular a MAC address;
- a status of a subscriber, in particular a status of connection within the network.

9. The method according to any of the preceding claims, wherein the third network element is a legal interception device.

10. The method according to any of the preceding claims, wherein the third network element sends an interception message to the first network element prior to step (a).

11. The method according to any of the preceding claims, wherein the first network element requests the identity information from the second network element in a AAA information exchange.

12. The method according to any of the preceding claims, wherein the identity information is encrypted.

13. The method according to claim 12, wherein the identity information is encrypted by the second instance and decrypted by the third instance.

14. The method according to any of claims 12 or 13, wherein a symmetric or an asymmetric ciphering is used.

15. A device for legal interception comprising a processor unit that is arranged such that the method according of any of the preceding claims is executable on said processor unit.

16. The device according to claim 15, wherein said device is a communication device, in particular a Legal Interception device.

17. A device for legal interception comprising:
- means for requesting a legal interception from a first network element;
- means for receiving an identity information from the first network element after it has been obtained from a second network element.

18. Communication system comprising the device according to any of claims 15 to 17.
